Europäisches Patentamt

European Patent Office

Office européen des brevets

(19)

(11) Publication number: **0 092 857**
**A1**

(12) **EUROPEAN PATENT APPLICATION**

(21) Application number: **83200442.8**

(22) Date of filing: **29.03.83**

(51) Int. Cl.³: **A 21 C 1/14**
**A 21 C 1/02**

(30) Priority: **27.04.82 IT 6755182**

(43) Date of publication of application:
**02.11.83 Bulletin 83/44**

(84) Designated Contracting States:
**AT BE CH DE FR GB IT LI LU NL SE**

(71) Applicant: **CO.BI. S.a.S. di Bianco & Costa**
**Località Vaccheria, 7/2**
**I-12051 Alba (Cuneo)(IT)**

(72) Inventor: **Costa, Rinaldo**
**Loc. San Cassiano N. 13**
**I-12051 Alba (Cuneo)(IT)**

(74) Representative: **Lotti, Giorgio**
**c/o Ing. Barzanò & Zanardo Milano S.p.A. Via Cernaia 20**
**I-10122 Torino(IT)**

(54) Kneading machine for food products.

(57) A kneading machine comprises a rotatable platform (11) on which annular vessels (12) rest; laterally to the platform (11) there are two frames (13, 14), of which one (14), namely the kneading frame, carries a stirrer (47) and means (50, 51) which engage with the vessel (12) in order to rotate it about its axis when the stirrer (47) dips into said vessel and is also rotated about its axis, thus kneading the materials contained in the vessel; the other frame (13), namely the discharge frame, comprises a first framework (30) which grips and raises a vessel (12) from the platform (11) and moves it against a second framework (31) in order to lock it against said frameworks (30, 31), which form a carriage (22) rotatable towards the outside of the machine in order to discharge the mix which has been previously formed in the vessel (12) at the frame (14); the platform carrying several vessels (12) and rotating in order to selectively locate them in positions corresponding firstly with the kneading frame (14) and then with the discharge frame (13).

Fig.1

## DESCRIPTION

The invention relates to a kneading machine for food products.

The large food production industries have to process large quantities of dough in very short times, for which purpose they must possess a fixed machine assembly of the smallest possible overall size, of easy accessibility, and which is able to carry out kneading and then to discharge the prepared product in the shortest possible time.

In Italian patent applications No. 67167-A/79 of 26 January 1979 and No. 68519-A/79 of 23 July 1979, the applicant proposed a machine comprising a fixed frame to which an annular vessel was coupled; a stirrer underwent translatory motion therein, and on termination of the kneading operation was extracted by raising it along guides on the frame; the vessel was then raised along further guides on the frame, and turned over in order to discharge the kneaded product.

This machine offers considerable advantages, but possesses the serious drawback that the cycle can be executed only in one vessel at a time, and thus between each kneading operation there is an idle time corresponding to the time necessary for discharging the kneaded product.

In certain medium sized firms, this idle time may not be of significance, but in certain other large firms it is essential to be able to effect continuous kneading, for which reason the large industries usually possess two or more kneading machines so that when one is kneading, the other is discharging and vice versa, in order to eliminate idle times during kneading.

The invention now provides a machine comprising a rotatable platform on which vessels are mounted.

Connected to the platform there are also two frames provided respectively with a mobile stirrer for dipping into a vessel and executing the kneading operation, and with means for raising a vessel and overturning it in order to discharge the mix.

The machine conceived in this manner enables the loading, kneading and discharge operations to be carried out simultaneously in different vessels, which at the end of each operation rotate into positions for the next operation.

It is therefore apparent that with this apparatus there are practically no more idle times associated with any loading, kneading or discharge operation, thus attaining the objects of the invention.

This and further objects and advantages of the invention are attained by a kneading machine for food products, characterised by comprising a base on which there is rotatably mounted a platform on which annular vessels provided with a central column rest, laterally to the platform there being mounted two frames, namely the kneading frame and discharge frame;  the kneading frame comprising a stirrer mobile between two positions, namely a position extracted from, and a position dipping into a vessel of the platform, drive means being provided for rotating the stirrer about its axis when it dips into the vessel, the insertion of the stirrer into the vessel causing the vessel to engage with mechanical members which, by way of drive means, rotate it about its central axis;  the discharge frame comprising means for gripping and supporting a vessel of the platform, said means being slidable along guides on the frame in order to engage in second means above the vessel and to clamp the vessel therebetween, said first and second means being rotatable about the frame in a direction towards the side or rear of the platform; there being provided drive means for raising and overturning the vessel gripping means, and drive means for rotating the platform about its axis.

A preferred embodiment of the machine according to the invention is described by way of non-limiting example hereinafter, with reference to the accompanying drawings in which:

Fig. 1 is an overall diagrammatic perspective view of the proposed machine;

Figs. 2 and 3 are partially sectional views of the machine in its various operating stages;

Fig. 4 is a view of part of an alternative embodiment of the machine.

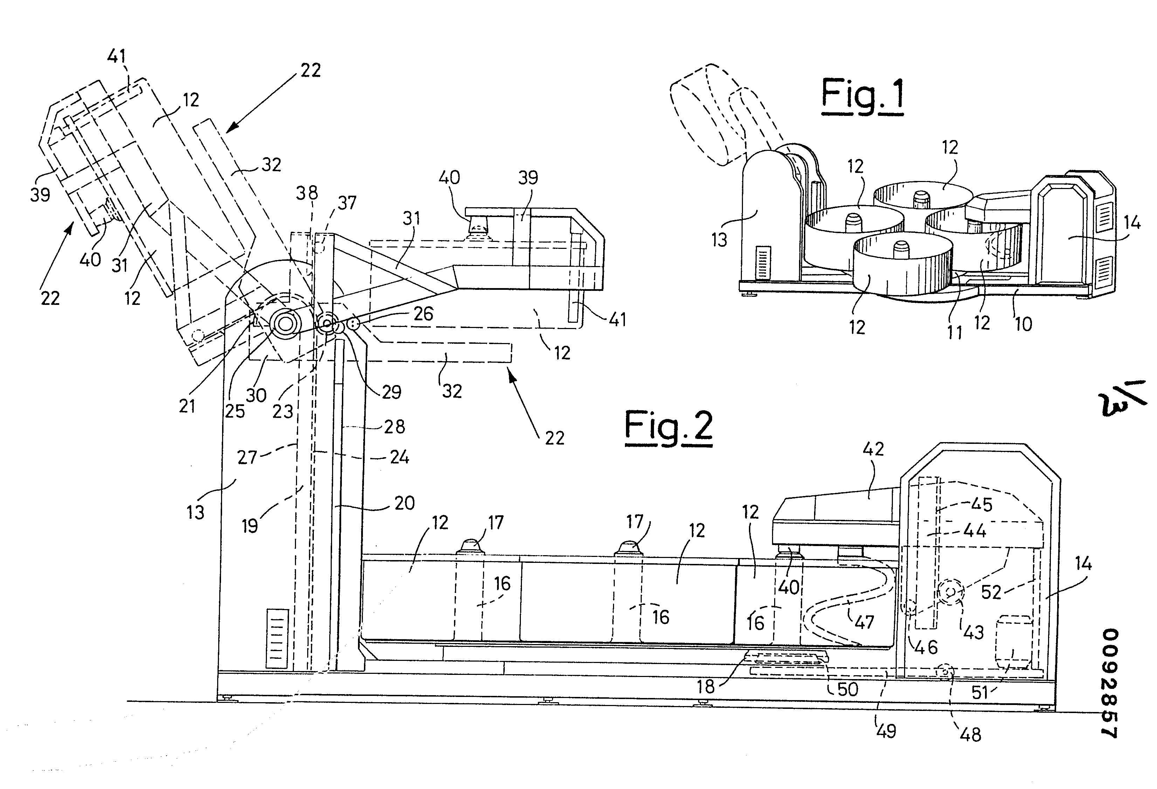

The proposed machine consists substantially (Fig. 1) of a base 10 on which a platform 11 carrying annular vessels 12 is rotatably mounted.

From two opposite sides of the base there vertically extend a frame 13 provided with means for raising and overturning a vessel, and a frame 14 provided with stirrer means which can dip into and be extracted from a vessel, and with means for selectively rotating a vessel about its axis.

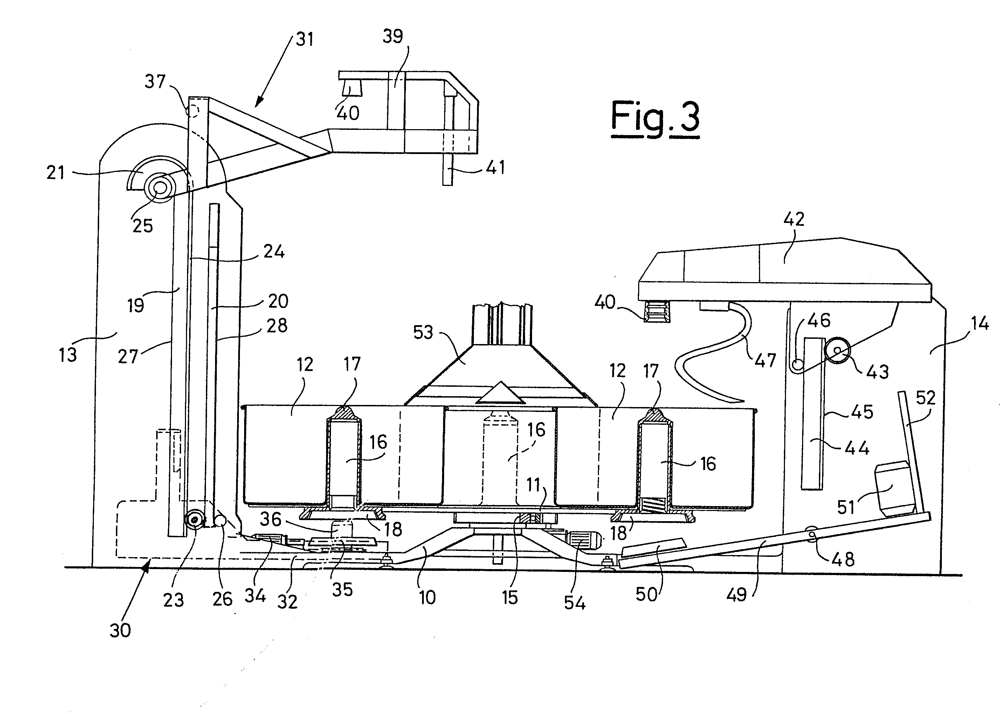

Figures 2 and 3 show the fundamental details of the machine more clearly.

A thrust bearing 15 on which the vessels 12 rest is disposed between the base 10 and platform 11 (Fig. 3).

Each vessel comprises a hollow axial column 16 with a substantially conical top 17. Each vessel is provided lowerly, in a position corresponding with the column 16, with an annular flared appendix 18 for the purposes described hereinafter.

The frame 13 is formed from two side-by-side uprights, in each of which there are provided parallel vertical guides 19 and 20. The guide 19 is connected upperly to a semi-circumferential guide 21. The outer surface 24 of the guide 19-21 is also toothed. Between the uprights of the frame 13 there is inserted a carriage 22 which slides along the guides by means of toothed wheels 23 which engage along the toothing 24, and is kept level during its translatory movement by means of further smooth wheels 26 running idly on the outer surface 28 of the guide 20.

The carriage 22 is also provided with an abutment 29 for the support of its framework during the rising movement thereof. The carriage 22 consists of two frameworks 30 and 31, of which the first carries the toothed wheel 23, and supports on its cantilever portion 32 a drive motor 34 and a frusto-conical plate 35 provided with a stem 36 and facing the frusto-conical portion 18 of the vessel 12 (Fig. 3).

The second frame 31 is provided with the idle wheels 25 pivoted on the guide 21, and a further wheel 37 slidable along a surface 38 of the first framework 30 (Fig. 2) when the frameworks 30 and 31 are rigid with each other. The framework 31 has a structure such as to completely embrace a vessel 12, and is provided with an arm 39 comprising a cap 40 which can be fitted under pressure over the conical end 17 of the column 16. Finally, the framework 31 is provided with a scraper 41 for use as described hereinafter.

The frame 14 also comprises two uprights, between which an arm 42 is inserted. The arm 42 slides vertically between the uprights when a motor (not shown) drives toothed wheels 43 which engage along vertical guides 44 provided on the uprights and toothed along their

surface 45.

Wheels 46 carried by the arm 42 and running idly on the other surface of the guide 44 ensure stability of the arm during its translatory movement.

The arm 42 carries a projecting stirrer 47 designed to dip into the vessel, and rotate it about its axis by motor means and possibly linkages, not shown. The arm 42 also carries a cap 40 as in the case of the framework 31 of the carriage 22, and arranged to be fitted over the end 17 of a vessel column 16. A lever 49 is hinged at 48 to the uprights of the frame 14, and carries pivoted at one end a frusto-conical plate 50 designed to fit under friction engagement into the frusto-conical cavity 18 of a vessel. At its other end the lever 49 carries a motor 51 arranged to rotate the plate 50, and a bar 52 on which the arm 42 can rest, as described hereinafter. The apparatus described heretofore operates in the following manner.

The product to be mixed is fed into a vessel 12, for example by means of a hopper 53 shown in Figure 3, after which the platform 11 is rotated by operating the motor 54 (Figure 3) until the loaded vessel 12 has arrived below the arm 42, which is in a raised position. The arm is lowered until the stirrer 47 dips into the vessel and the cap 40 rests on the column 16. At the same time, the arm 42 presses on the bar 52, thus rotating the lever 49 until the frusto-conical plate 50 engages in the corresponding seat 18 of the vessel. On operating the motor 51 and the motor of the stirrer 47, the vessel 12 and stirrer 47 both rotate about their axis, so mixing the product.

On termination of the mixing operation, the arm 42 is again raised to extract the stirrer 47 and disengage the plate 50 from the seat 18, as shown in Figure 3. The vessel together with the mix rotates firstly into the rest position (Figure 1) and then into the position for discharge in front of the frame 13.

Having reached this position, the motor 34 is operated to cause the lower framework 30 of the carriage 22 to rise until its plate 35 and stem 36 engage respectively in the frusto-conical seat 18 and in the column 16 of the vessel containing the mix. As the framework 30 continues to rise, it becomes rigid with the framework 31 which, as shown in Figure 3, is located in the top of the frame 13.

At the same time, the vessel column 16 presses against the cap 40 to slightly bend the framework 31, and the surface 38 of the framework 30, which has risen, presses against the wheel 37 of the upper framework 31 to place the entire assembly under stress and prevent any slackening and disengagement of the two elements 30 and 31 and of the vessel 12 clamped between the cap 40 of the framework 31 and the plate 35 of the framework 30. As the toothed wheel 23 continues to revolve, the carriage now rotates by virtue of the fact that the wheel 23 slides on the circular surface 21 of the guide 19, and the wheel 25 acts as the centre of rotation, being located in the appropriate circumferential seat of the guide 21. Having reached the position shown by dashed lines in Figure 2, i.e. in which the framework 30 again abuts against a fixed stop 29, the carriage halts to allow complete discharge of the mix. At the same time, a motor rotates the vessel about its axis, and the scraper 41 accelerates the discharge of the mix. On termination of this operation, the subsequent operations are carried out in the reverse order by returning the carriage 22 into its horizontal position, then releasing the first framework 31, then resting the vessel on the platform 11, and finally releasing the plate 35 and stem 36 from their respective engagements (Figure 3).

The empty vessel 12 can thus be again rotated into the
previously illustrated loading position, to begin a new cycle.

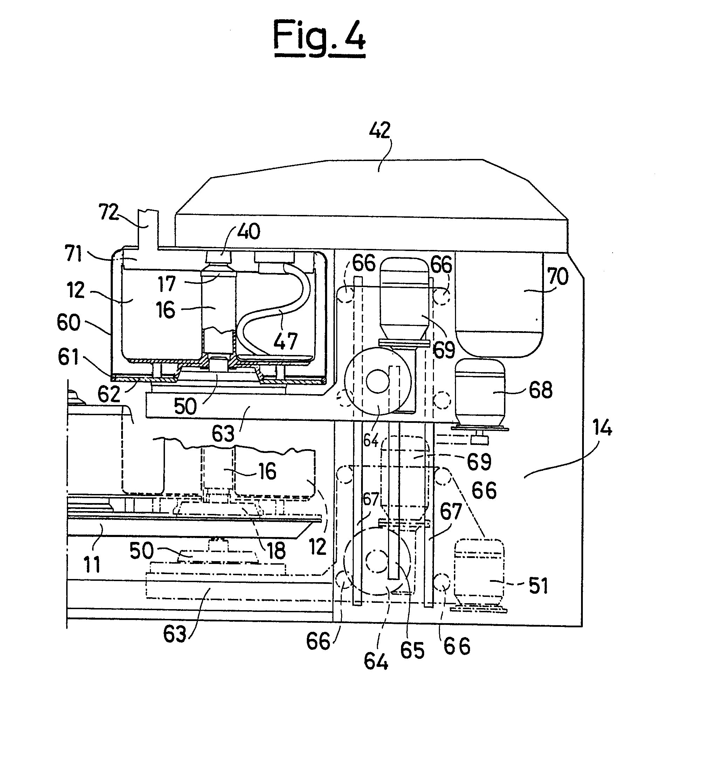

Figure 4 shows an alternative embodiment for the section in
which mixing is carried out.   In this respect, if certain
determined mixes such as shortbread are to be made, then the
mixing must be carried out either under vacuum or under pressure,
in which case the embodiment shown in Figures 1 to 3 is unsuitable
because mixing is carried out in an open vessel.   Corresponding
elements in the two embodiments of Figures 1 to 3 and Figure 4
carry the same reference numerals.

In the alternative embodiment, instead of lowering the head
42 on to the vessel 12 as described, the vessel 12 is raised towards
the head 42, which is provided with a hood 60 carrying a seal ring
61 on its open edges.

The vessel 12 still rests on the platform 11, but comprises
an annular base 62.

The frusto-conical plate 50 is mounted on a carriage 63 provided
with a toothed wheel 64 slidable along the rack 65 of the frame 14.

Idle rollers 66 on the carriage 63 are instead slidable along
guides 67 parallel to the rack 65.   Motors 51, 69 and 70 rotate
the frusto-conical plate 50, the toothed wheel 64 and the stirrer
47 respectively, all by way of belt, chain or gear drives, which are
not shown for simplicity of drawing.

The position equivalent to Figure 3 is shown by dashed lines,
i.e. in which the vessel 12 lies on the platform 11 and the plate
50 is disinserted, this being the case when the platform is rotating
in order to remove one vessel from the frame 14 and move another up
to it ready for mixing the products contained therein.

At this point, by operating the toothed wheel 64 the carriage 63 is made to rise so that its plate 50 engages in the corresponding seat 18 of the vessel 12, thus lifting it from the platform until it reaches the position shown by full lines in Figure 4, in which the base 62 of the vessel 12 engages in the ring 61, and the top 17 of the vessel engages in the cap 40 of the head 42.

A chamber 71 is thus created between the vessel 12 and hood 60, which is connected by way of the conduit 72 to means for creating the vacuum or pressure inside the chamber, of which the interior of the vessel also forms part.

This method by which the vessel is raised (Figure 4) instead of the head 42 being lowered (Figures 2 and 3) can obviously be also used in those cases in which the hood 60 is not necessary and instead the mixing takes place in the open, in this case it being necessary only to dispense with the hood 60 and base 62 of the vessel 12 to obtain a device equivalent to that of Figures 2 and 3, the only difference being that the vessel 12 is now moved towards the head 42 instead of vice versa.

The cycle has been described for only one vessel 12, in both its embodiments, but it is apparent that while for example one is being loaded, mixing is taking place in another, the mix is lying at rest in the next, and the mix is being discharged to the outside from the last. In this manner there is thus always one vessel being loaded, one in which mixing is being carried out, and one being discharged, the idle times being only those necessary to rotate the platform in order to move each vessel to the point in which the subsequent operation is carried out. The advantageous but non-limiting arrangement described comprises four vessels mounted on the platform. However these can vary in number from a minimum of two (one of which is loaded and undergoes mixing and one of which is being discharged) to a maximum which varies according to requirements determined by speed and the quantity of finished product to be obtained in a certain time.

- 11 -

0092857

PATENT CLAIMS

1. A kneading machine for food products, characterised by comprising a base (10) on which there is rotatably mounted a platform (11) on which annular vessels (12) provided with a central column (16) rest, laterally to the platform (11) there being mounted two frames (14 and 13), namely the kneading frame and discharge frame; the kneading frame (14) comprising a stirrer (47) mobile between two positions, namely a position extracted from, and a position dipping into a vessel (12) of the platform (11), drive means being provided for rotating the stirrer (47) about its axis when it dips into the vessel (12), the insertion of the stirrer (47) into the vessel causing the vessel (12) to engage with mechanical members (50) which, by way of drive means (51, 66), rotate it about its central axis; the discharge frame (13) comprising means (30) for gripping and supporting a vessel (12) of the platform, said means being slidable along guides (19) on the frame (13) in order to engage in second means (31) above the vessel and to clamp the vessel therebetween, said first (30) and second (31) means being rotatable about the frame (13) in a direction towards the side or rear of the platform; there being provided drive means (34) for raising and overturning the vessel gripping means (30), and drive means (54) for rotating the platform (11) about its axis.

2. A machine as claimed in claim 1, characterised in that the mixing frame (14) is formed from two uprights provided with vertical guides (44) comprising toothing (45) in which there engage toothed wheels (43) driven by a motor and rigid with an arm (42) which at one end carries the stirrer (47), which is rotated about its axis by said motor by way of mechanical transmissions.

3. A machine as claimed in claims 1 and 2, characterised in that the means which rotate the vessel (12) comprise a motor (51) which, by way of mechanical transmissions, rotates a plate (50) which is inserted with an interference fit into a seat (18) of the vessel.

4. A machine as claimed in claim 3, characterised in that the motor (51) and plate (50) are mounted at the ends of two arms of a lever (49) hinged (48) to the mixing frame (14), the end carrying the motor (51) comprising a stop (52) against which there abuts the arm (42) carrying the stirrer (47) such that with each lowering (raising) movement of the arm (42) and consequent dipping (extraction) of the stirrer (47) there corresponds a rotation of the lever (49) in the sense of engaging (disengaging) the plate (50) in (from) the vessel seat (18).

5. A machine as claimed in claim 3, characterised in that the motor (51) and plate (50) are mounted at the end of a carriage (63) provided with toothed wheels (64) which engage in vertical toothed guides (65) of the frame (14) in order to assume, in succession, a first rest position in which it is disengaged from the vessel, a second position in which the vessel is engaged, and a third position in which it has moved the vessel into a position corresponding with the head (42), the stirrer (47) consequently dipping into the vessel.

6. A machine as claimed in claim 5, characterised in that there is rigid with the head (42) a hood (60) into which the vessel is inserted, and of which the open edges are arranged to form a seal against the vessel when this latter is in a position corresponding with the head (42), thus forming a closed chamber between the
hood (60) and said vessel.

7. A machine as claimed in claim 1, characterised in that the
vessel gripping and support means (30) comprise a framework provided
with toothed wheels (23) which engage in toothed vertical guides
(19) of the discharge frame and are slidable along them under the
action of drive means;  the second means (31) above the vessel
comprising a second framework against which the vessel raised by
the first framework (30) abuts;  the second framework (31) being
hinged to the discharge frame in order to assume two extreme positions,
namely one in which the rising vessel abuts against it, and one in
which it has turned over towards the outside of the machine when the
first framework (30) has become rigid with the second framework (31)
on termination of the rising movement, and the vessel is clamped
between the two frameworks (30 and 31).

8. A machine as claimed in claim 7, characterised in that the
first framework (30) comprises a rotatable plate (35) which fits
into an appropriate seat (18) of the vessel in order to cause this
latter firstly to rise, then to rotate about its axis, then to overturn.

9. A machine as claimed in claim 7, characterised in that the
vessel support framework becomes fixed into the overturning frame
on termination of the raising movement, and the vessel is retained
between the frames to cause slight elastic deformation of these latter.

10. A machine as claimed in claim 1, characterised in that four spaced-
apart vessels are disposed on the platform.

Fig.1

Fig.2

1/3

0092857

0092857

Fig.3

# Fig.4

European Patent
Office

**EUROPEAN SEARCH REPORT**

**0092857**
Application number

EP    83  20  0442

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| Y | FR-A-2 387 075 (BAKER PERKINS HOLDINGS LTD.) <br> * Claims 1-3; figure 1 * | 1 | A 21 C    1/14 <br> A 21 C    1/02 |
| Y | US-A-3 749 373 (KATE KEMPER) <br> * Claims 1-15; figures 1,2 * | 1 | |
| A | DE-B-1 184 295 (WINKLER) <br> * Claim 1; figure 1 * | 1 | |
| A,D | DE-A-2 951 530 (COSTA RINALDO) | | |

TECHNICAL FIELDS SEARCHED (Int. Cl. ³)

A 21 C

The present search report has been drawn up for all claims

| Place of search <br> THE HAGUE | Date of completion of the search <br> 12-07-1983 | Examiner <br> WETZEL H. |
|---|---|---|